# EUROPÄISCHE PATENTANMELDUNG

(11) **EP 0 992 433 A2**
(43) Veröffentlichungstag der Anmeldung: **12.04.2000**
(21) Anmeldenummer: 99117302.2
(22) Anmeldetag: 03.09.1999
(51) Int. Cl.: B65B 43/52

(54) **Verfahren und Vorrichtung zum Transportieren, Prüfen, Befüllen und Verschliessen eines Sackes**

(30) Priorität: 08.09.1998 DE 19840793
(71) Anmelder: Chronos Holding Ltd, Nottingham NG5 5HD (GB)
(72) Erfinder: Schwenke, Dieter, 25560 Schenefeld (DE); Oster, Robert, 53332 Bornheim (DE)
(74) Vertreter: Fechner, Joachim, Dr.-Ing.

(57) **Zusammenfassung**

Die Erfindung betrifft ein Verfahren und eine Vorrichtung zum Transportieren, Prüfen, Befüllen und Verschließen eines Sackes, welcher einen zu einem rechteckigen Querschnitt aufspreizbaren Sackkorpus aus zwei breiteren ersten und zwei schmaleren zweiten Sackwandungen, einen den Sackkorpus unten verschließenden Sackboden, eine den Sackkorpus oben begrenzende Sacköffnung und einen geöffneten Sackverschluß umfaßt, wobei der Sackverschluß seinerseits erste Verschlußlappen, die jeweils an den ersten Sackwendungen anschließen und rechtwinklig zu den ersten Sackwandungen horizontal von der Sacköffnung nach außen wegstehen, zweite Verschlußlappen, die jeweils an den zweiten Sackwandungen anschließen und die - insbesondere nach innen auf die Sacköffnung umgeschlagen - horizontal liegen, umfaßt, so daß die ersten Verschlußlappen und die zweiten Verschlußlappen einen in einer horizontalen Ebene liegenden rahmenförmigen Abdichtkragen bilden, bei dem während des Transportierens, Prüfens, Befüllens und Verschließens die Außenbereiche der ersten Verschlußlappen von antreibbaren Fördermitteln gehalten werden.

## Beschreibung

Die Erfindung betrifft ein Verfahren zum Transportieren, Prüfen, Befüllen und Verschließen eines Sackes, welcher
einen zu einem rechteckigen Querschnitt aufspreizbaren Sackkorpus aus zwei breiteren ersten und zwei schmaleren zweiten Sackwandungen, einen den Sackkorpus unten verschließenden Sackboden, eine den Sackkorpus oben begrenzende Sacköffnung und
einen geöffneten Sackverschluß
umfaßt, wobei der Sackverschluß seinerseits
erste Verschlußlappen, die jeweils an den ersten Sackwendungen anschließen und rechtwinklig zu den ersten Sackwandungen horizontal von der Sacköffnung nach außen wegstehen, zweite Verschlußlappen, die jeweils an den zweiten Sackwandungen anschließen und die - insbesondere nach innen auf die Sacköffnung umgeschlagen - horizontal liegen,
umfaßt,
so daß die ersten Verschlußlappen und die zweiten Verschlußlappen einen in einer horizontalen Ebene liegenden rahmenförmigen Abdichtkragen bilden.

Der Sack ist insbesondere zum Befüllen mit pulverförmigen Füllgütern vorgesehen. Das Abfüllen von pulverförmigen Füllgütern in Säcke und das anschließende Verschließen der Sackverschlüsse weist einige Probleme auf, die nachstehend angesprochen werden. Hierbei werden insbesondere bei Papiersäcken üblicherweise zum Verschließen Heißschmelzkleber auf die Verschlußoberflächen aufgetragen und diese miteinander verklebt bzw. im Falle von aus thermoplastischen Folien bestehenden Säcken aufeinanderliegende Verschlußoberflächen thermisch miteinander verschweißt.

Ein Problem liegt in einer nur schwer zu unterdrückenden Staubentwicklung beim Abfüllen, die zur Anlagenverschmutzung und zur Arbeitsplatzbelastung führt und die sogar zum Risiko von Staubexplosionen führen kann. Diese Staubentwicklung ist daher möglichst gering zu halten.

Um die Staubentwicklung beim Befüllen in erträglichem Ausmaß zu halten, sind Ventilsäcke weit verbreitet, bei denen in einen Kreuzboden an einem Ende eine Ventilhülse eingeklebt ist. Der Nachteil solcher Säcke liegt in der reduzierten Füllgeschwindigkeit, die durch den Ventilquerschnitt, in den ein Füllstutzen von wenigen Zentimetern Durchmesser einbracht wird, limitiert ist. Schließlich ist die Herstellung und das Recyclen durch Verwendung der zusätzlichen Ventilhülse verteuert.

Sofern Offensäcke verwendet werden, läßt sich die Füllgeschwindigkeit erhöhen, es sind jedoch die gesamten Verschlußoberflächen nach dem Befüllen staubüberzogen, so daß das Verschließen nicht immer fehlerfrei erfolgen kann.

Ein zweites Problem liegt darin, daß der Bereich des Sackverschlusses beim Abfüllen unvermeidlich von einer Staubschicht überzogen wird. Eine mit Staub überzogene Oberfläche behindert sowohl das Verkleben mit Heißschmelzklebern als auch das Verschweißen der Oberflächen von thermoplastischen Folien.

Ein weiteres Problem liegt darin, daß mit pulverförmigem Material befüllte Säcke, die nach dem Abfüllen beispielsweise nach Art einer Sackfaltung verschlossen werden, an den Einschlagecken Mikroöffnungen aufweisen, die über Kanäle mit dem Sackinneren in Verbindung stehen, aus denen Füllgut austreten kann und über die insbesondere bei Lebensmitteln Schädlinge Zugang finden können.

Hiervon ausgehend ist es die Aufgabe der vorliegenden Erfindung, ein Verfahren zum Transportieren, Prüfen, Befüllen und Verschließen eines Sackes bereitzustellen, das sich zum einen unter weitestgehender Unterdrückung einer Staubentwicklung durchführen läßt und ein von der Staubentwicklung unbehindertes Verschließen des Sackes ermöglicht.

Die Lösung hierfür liegt in den Merkmalen der unabhängigen Verfahrens- und Vorrichtungsansprüche. Diese legen einen Sack zugrunde, der einen zu einem rechteckigen Querschnitt aufspreizbaren Sackkorpus aus zwei breiteren ersten und zwei schmaleren zweiten Sackwandungen, einen den Sackkorpus unten verschließenden Sackboden, eine den Sackkorpus oben begrenzende Sacköffnung und einen offenen Sackverschluß umfaßt, wobei der Sackverschluß seinerseits erste Verschlußlappen, die jeweils an den ersten Sackwandungen anschließen und rechtwinklig zu den ersten Sackwandungen horizontal von der Sacköffnung nach außen wegstehen, und zweite Verschlußlappen, die jeweils an den zweiten Sackwandungen anschließen und die - insbesondere nach innen auf die Sacköffnung umgeschlagen - horizontal liegen, umfaßt, so daß die ersten Verschlußlappen und die zweiten Verschlußlappen in einer Ebene liegenden rahmenförmigen Abdichtkragen bilden. Eine bevorzugte Ausführung und Art zur Herstellung eines derartigen Sackes wird in der zeitgleichen Patentanmeldung der Chronos Richardson GmbH beschrieben. Ein wesentliches Merkmal des genannten Verfahrens ist es, daß die ersten Verschlußlappen während des Transportierens, Prüfens, Befüllen und Verschließen des Sackes von antreibbaren Fördermitteln gehalten werden, so daß der Sack von diesen freihängend gehalten werden kann. Dies schließt insbesondere das Befüllen des Sackes ein. Innerhalb der Transportmittel, die insbesondere Paare von Transportbändern umfassen, können Führungsprofile bzw. Führungsleisten die horizontal liegenden Teile des genannten Abdichtkragens unterstützen.

Ein Verfahren und eine Vorrichtung zum Prüfen des Sackes zeichnet sich dadurch aus, daß der flach gedrückte Sackkorpus zwischen großflächigen luftdurchlässigen Abstützwinkeln in seiner flach gedrückten Form gehalten wird und daß auf den im wesentlichen horizontal liegenden Dichtkragen mit Abstand zur Sacköffnung ein Druckstutzen abdichtend aufgesetzt wird, wobei über die Sacköffnung zu Prüfzwecken Druckluft zugeführt wird.

Sofern sich ein übermäßiger Druckverlust am Druckstutzen einstellt, werden die ersten Verschlußlappen von den Transportmitteln freigegeben und der fehlerhafte Sack wird ausgeworfen.

Ein neues Verfahren und eine besondere Vorrichtung zum Befüllen sind durch einen Füllstutzen gekennzeichnet, der unmittelbar entlang der Kante der Sacköffnung verlaufende, die Sacköffnung umschließende Abdichtmittel aufweist, die auf den im wesentlichen horizontal liegenden Abdichtkragen aufgesetzt werden, bevor das Füllgut in den Sack eingebracht wird. Damit wird der Abdichtkragen zum späteren Verschließen von Füllgut, insbesondere von Staub freigehalten. Ein besonderes Verfahren und eine entsprechende Vorrichtung zum Verschließen des gefüllten Sackes in einem ersten Schritt besteht darin, daß auf den im wesentlichen horizontal liegenden Abdichtkragen ein Abdeckblatt aufgelegt wird, das in dem zuvor vom Füllstutzen staubfrei gehaltenen Bereich aufgeklebt wird bzw. mit dem Abdichtkragen verschweißt wird. Auch hierbei ist es wesentlich, daß der Abdichtkragen in einer Ebene liegt, wobei ein Abdeckblatt, z.B. abrollend aufgelegt oder auch in ebener Konfiguration aufgelegt und umlaufend mit dem staubfrei gehaltenen Bereich "versiegelt" wird.

Das abschließende Falten des Sackverschlusses kann in weiteren Schritten in weiteren Verschließvorrichtungen erfolgen.

Auf Einzelheiten der Vorrichtungen und der erfindungsgemäßen Verfahren wird nachstehend anhand der Beschreibung von Ausführungsbeispielen näher eingegangen.

Bevorzugte Ausführungsbeispiele der erfindungsgemäßen Vorrichtung, anhand der das erfindungsgemäße Verfahren zum Transportieren, Prüfen, Befüllen und Verschließen eines speziellen Sackes erörtert werden, sind in den nachstehenden Zeichnungen gezeigt.
- Fig. 1: zeigt zwei Stationen der erfindungsgemäßen Vorrichtung in perspektivischer Darstellung
a) eine Station zum Einführen eines Sackes in die Vorrichtung,
b) eine Station zum Prüfen eines Sackes in der Vorrichtung.
- Fig. 2: zeigt mehrere Stationen einer erfindungsgemäßen Vorrichtung in perspektivischer Darstellung
a) eine Station zum Prüfen eines Sackes in der Vorrichtung (Teildarstellung),
b) eine Station zum Befüllen eines Sackes mit einem im Abstand dazu dargestellten Füllstutzen,
c) eine Station zum Aufbringen eines Abdeckblattes auf einen befüllten Sack (Teildarstellung).
- Fig. 3: zeigt Teile der Station zum Prüfen
a) im Querschnitt durch die Vorrichtung
b) im Längsschnitt durch die Vorrichtung.
- Fig.4: zeigt Teile der Station zum Befüllen nach Figur 2b in perspektivischer Darstellung
a) mit beweglichen Abstützmittel des Füllstutzens in nach oben zurückgezogener Position,
b) mit beweglichen Abstützmittel des Füllstutzens in nach unten vorgeschobener unter den Abdichtkragen eingedrehter Position.
- Fig. 5: zeigt Teile der Station zum Befüllen gemäß Figur 2b
a) im Querschnitt durch die Vorrichtung in der Position nach Figur 3b,
b) im Längsschnitt mit Einzelheiten nach den Figuren 3a und 3b.
- Fig. 6: zeigt weitere Teile der Befüllstation nach Fig. 2b
a) mit Praliplatten in der Position vor dem Befüllen des Sackes,
b) mit Prallplatten in der Position nach dem Beginn des Befüllens des Sackes.
- Fig. 7: zeigt Teile einer ersten Verschließstation
a) mit einem Aufnahmerahmen zum Vereinzeln eines Abdeckblattes,
b) mit einer Doppeldüse zum Beleimen eines Abdeckblattes,
c) mit einem vorbereiteten Abdichtkragen eines Sackes,
d) mit dem auf den Abdichtkragen aufgelegten Abdeckblatt,
e) mit Abstützmitteln für doppellagige Verschlußleisten.

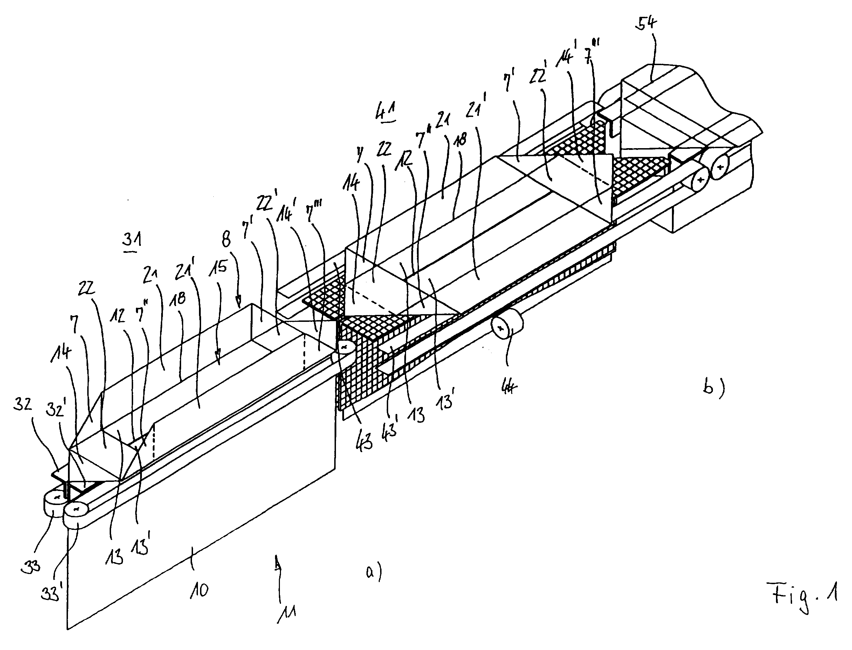

In Fig. 1a) ist eine Einführstation einer erfindungsgemäßen Vorrichtung gezeigt, in der ein Sack 11, in einer ersten Konfiguration aufgenommen ist. Dieser Sack umfaßt einen flachgedrückten Sackkorpus 10, dessen unterer Bereich, insbesondere dessen abschließender Boden nicht dargestellt ist. Der Sackkorpus 10 bildet oben eine schlitzförmige Öffnung 12, beidseitig zur Öffnung 12 sind Streifen 13, 13' erkennbar, die noch dem Sackkorpus zuzurechnen sind. Diese Streifen 13, 13' stehen vom flachgedrückten Sackkorpus 10 nach beiden Seiten rechtwinklig ab. Sie werden durch eine in einer Ebene liegenden, ein Rechteck bildenden Anschlußkante 18 begrenzt, die die Teile des Sackkorpus 10 von den Teilen des Sackverschlusses 8 trennt. Dieser wird durch erste Verschlußlappen 21, 21' gebildet, die außerhalb der Anschlußkante 18 liegen und rechtwinklig von der Ebene der Streifen 13, 13' wegstehen, sowie durch zweite Verschlußlappen 22, 22' gebildet, die innerhalb der Anschlußkante 18 liegen und auf die Ebene der Streifen 13, 13' geschlagen sind. Außerhalb der Anschlußkante 18 liegen im Anschluß an die zweiten Verschlußzwickel 22, 22' Endzwickel 14, 14', die ebenfalls dem Sackkorpus zuzuordnen sind. Die Teile des Sackverschlusses 8, nämlich die ersten und zweiten Verschlußlappen, bilden doppellagige Verschlußzwickel 7, 7', 7'', 7''', miteinander, die außen durch eine Knickkante 25 am Übergang der ersten Verschlußzwickel 21 zu den zweiten Verschlußzwickeln 22 begrenzt sind. Es sind jeweils an vier Ecken Abdichtzwickel 7 und Knickkanten 25 vorhanden. Die Teile der nachstehend zu beschreibenden Einführstation 31 sind ebenso wie die Teile der nachfolgenden Stationen im wesentlichen symmetrisch zu der durch den flachgedrückten Sackkorpus 10 definierten Ebene und insbesondere mit Ausnahme einiger oberhalb der Sacköffnung liegender Funktionsteile doppelt ausgeführt. Die Einführstation 31 umfaßt ein Paar von Führungsprofilen 32, 32', die mit oberen Flächenteilen die Streifen 13, 13' des Sackkorpus unterstützen. Unterhalb der Profile, die den Sackkorpus 10 gemeinsam eng führen, ist ein Paar von Transportbändern 33, 33' gezeigt, jeweils bestehend aus nicht im einzelnen bezeichneten Paaren von Umlenkrollen und Bandschlaufen, die bei vertikalen Drehachsen der Umlenkrollen auf den Sackkorpus unterhalb der Führungsprofile 32 einwirken und einen Einzug eines Sackes in die Einführstation und einen Vorschub eines Sackes aus der Einführstation heraus in die nachfolgende Station ermöglichen. In der sich an die Einführstation anschließenden Prüfstation 41 ist ein Sack 11 mit im wesentlichen übereinstimmender Konfiguration wie in der Einführstation gezeigt, jedoch sind die ersten Verschlußlappen 21 jeweils nach außen in die Ebene der Streifen 13 umgeklappt. Hierdurch entsteht ein horizontal liegender umlaufender Abdichtkragen 16, der von den ersten Verschlußlappen 21, 21' den zweiten Verschlußlappen 22, 22' und den Verschlußzwickeln 7, 7', 7'', 7''' gebildet wird. Der Abdichtkragen 16 umschließt die noch von den Streifen 13, 13' verschlossene Sacköffnung 15'. Innerhalb dieses Abdichtkragens liegen noch immer beidseits der schlitzförmigen Öffnung 12 die beiden Streifen 13, 13', außerhalb des Abdichtkragens 16 noch immer die Endzwickel 14, 14'. Die Station umfaßt aus Lochblechen oder Gitterrosten gebildete Abstützwinkel 42, 42', die wiederum paarweise symmetrisch so angeordnet sind, daß ihre horizontalen Schenkel die Streifen 13 unterstützen und die vertikalen Schenkel den flachgedrückten Sackkorpus 10 zwischen sich einschließen. Die vertikalen Schenkel sind hier ebenso abgebrochen dargestellt wie der Sackkorpus 10. Sie sind jedoch so weit nach unten ausgebildet, daß sie den gesamten Sackkorpus abstützen. Das Überführen der ersten Verschlußlappen 21 aus der vertikalen in die horizontale Position kann durch zwischen den beiden Stationen angeordnete ortsfest installierte Umlenkschuhe bewirkt werden. Die Prüfstation 41 umfaßt weiterhin Paare von Transportbändern auf beiden Seiten der Abstützwinkel, von denen jeweils nur untere Transportbänder 43, 43' dargestellt sind, die unmittelbar unterhalb der ersten Verschlußlappen 21 liegen, wobei die nicht bezeichneten Umlenkrollen mit horizontaler Achse angeordnet sind. Zu den dargestellten Transportbändern sind ergänzende darüberliegende Paare von Transportbändern anzunehmen, die jeweils unmittelbar oberhalb der ersten Verschlußlappen 21 zu liegen kommen, so daß die Paare von Transportbändern zu beiden Seiten der Abstützprofile auf die ersten Verschlußlappen 21, 21' paarweise so einwirken können, daß ein Sack in die Prüfstation eingezogen und aus der Prüfstation fortbewegt wird. Als weiteres, hier nicht dargestelltes Element umfaßt die Prüfstation einen Druckstutzen, der im wesentlichen die Form eines nach unten offenen, quaderförmigen Kastens hat und dem von der Rückseite Druckluft zugeführt werden kann. Die untere offene, rechteckige Fläche ist mit einer Abdichtkante versehen, die entlang der in der nachfolgenden Füllstation 51 entsprechend der Aufsetzlinie 54 für einen Füllstutzen, die innerhalb des Abdichtkragens 16 liegt, zur Anlage gebracht werden kann. Bei Aufgabe von Druckluft wird der Sack durch die Abstützwinkel 42 im wesentlichen in seiner Form gehalten. Undichtigkeiten im Sackkorpus würden durch einen Druckabfall im Druckstutzen erkennbar. In einem derartigen Fall würde der geringfügig höhenbewegliche Druckstutzen angehoben und die Abstützwinkel 42 und Transportbänder 43 symmetrisch zum Sack horizontal voneinander entfernt und die jeweils oberen und unteren Transportbänder der Paare von Transportbänder zu beiden Seiten würden in senkrechter Richtung voneinander entfernt, so daß insgesamt der Sack unter Einwirkung seines Eigengewichtes nach unten aus der Prüfstation abgeworfen würde. Ein Paar von auf dem Sack einwirkenden Abwurfrollen, von denen nur eine Abwurfrolle 44 zu sehen ist, können diesen Vorgang zur Sicherheit unterstützen. Fehlerfreie Säcke werden nach Beendigung des Prüfvorganges hingegen mittels der Transportbänder in die angedeutete Abfüllstation 51 weiter transportiert.

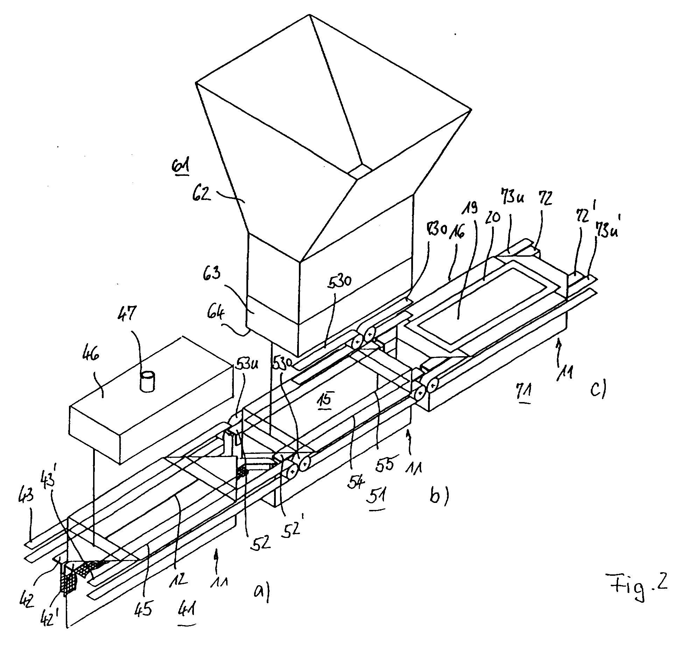

In Figur 2a) ist eine Prüfstation 41'in gegenüber der aus Figur 1 abgewandelten Ausführung dargestellt. Die Abstützwinkel 42 haben an ihren in Forderrichtung hinteren Ende Übergangsabschnitte, die sich y-förmig voneinander entfernen. Die Abstützwinkel sind durch nur angedeutete Gitterroste unter den Streifen 13 des Sackes und zu beiden Seiten des Sackkorpus ergänzt. Die Transportbänder 43, 43' liegen zu beiden Seiten der Abstützwinkel 42 und sind doppelt paarweise ausgeführt, wobei die Achsen ihrer Umlenkrollen horizontal liegen. Insoweit entspricht die Anordnung und Wirkungsweise der anhand der Prüfstation 41 in Figur 1 beschriebenen Transportbändern. Es sind jeweils nur die unteren Transportbänder der Paare von Transportbändern dargestellt. Der Sack hat die gleiche Konfiguration wie in der Prüfstation nach Figur 1, insofern wird auf die dortige Beschreibung Bezug genommen. Einzelheiten sind hier nicht bezeichnet. Oberhalb des Abdichtkragens 16, an dem eine Aufsetz- und Abdichtlinie 45 eingezeichet ist, befindet sich in übertrieben dargestellter abgehobener Position ein Druckstutzen 46 mit einer Druckluftleitung 47. Aus der Lage der Abdichtungslinie 45 ist zu erkennen, daß die an dem Druckstutzen vorhandenen Dichtungen von unten abgestützt werden und der Druckstutzen die Sacköffnung 15 für die Druckprüfung mit Abstand umschließt. In Förderrichtung anschließend an die Prüfstation 41' ist in Figur 2b eine Füllstation 51 dargestellt; diese weist mit Abstand voneinander laufende Führungsprofile 52, 52' auf, die unmittelbar innerhalb von Transportbänderpaaren 53, 53' liegen und die den gleichen Abstand voneinander haben wie die Transportbänder 43, 43' der Prüfstation 41'. Die Transportbänder wirken somit wieder auf die ersten Verschlußlappen ein. Die innerhalb davon liegenden Führungsprofile 52 unterstützen nur die inneren Abschnitte der ersten Verschlußlappen. Innerhalb des Abdichtkragens 16 des in der Station befindlichen Sackes ist eine Aufsetzlinie 54 eingezeichnet, die mit der Umfangslinie eines zur Füllstation 51 gehörigen Füllstutzens 61 übereinstimmt. Dieser ist in vertikaler Richtung übertrieben von dem Abdichtkragen entfernt dargestellt, während tatsächlich nur eine geringe Hubbewegung des Füllstutzens 61 möglich ist. In der zum Füllen vorgesehenen Position legt sich dabei der untere Stutzenrand 62 auf die Aufsetzlinie 54, während zum Transport ein geringes Abheben des Füllstutzens 61 vom Abdichtkragen erfolgt, so daß ein gefüllter Sack in die nachfolgende erste Verschließstation 71 überführt werden kann und ein weiterer Sack aus der Prüfstation 41' nachgeführt werden kann. Der Füllstutzen 61 ist nur prinzipiell dargestellt und umfaßt einen Zuführtrichter 62 und ein im wesentlichen quaderförmiges, oben und unten offenes Mundstück 63, wobei Klappenmechanismen zwischen den beiden genannten Teilen liegen können. Durch Freigabe einer Füllmenge in den Füllstutzen oder aus den Füllstutzen wird die schlitzförmige Öffnung 12 völlig geöffnet und gleichzeitig bilden sich erste Seitenwände 1 und zweite Seitenwände 2 am Sack 11 aus, wodurch der Sackkorpus 10 eine rechteckige Querschnittsform annimmt und der Sack voll aufgespreizt wird. An den Transportbändern 53 sind neben unteren Transportbändern 53u auch obere Transportbänder 53o teilweise dargestellt, so daß hier deutlich wird in welcher Weise der Sack zwischen den Paaren von Transportbändern geführt wird und gehalten wird. Die Haltekräfte der Paare von Transportbändern sind dabei vorzugsweise so ausgelegt, daß der Sack während des Befüllens und nach dem Befüllen freihängend in der Befüllstation 51 gehalten werden kann, d. h. der Sackboden muß nicht unterstützt werden. Dies hat den Vorteil, daß Säcke unterschiedlicher Länge in der gleichen Station befüllt werden können. Innerhalb des Aufsetzrandes 64, der auf die Aufsetzlinie 54 am Abdichtkragen aufsetzt, befindet sich am Mundstück 63 mit Abstand dazu noch ein Abdichtrand, der auf einer Abdichtlinie 55 unmittelbar an der Öffnungskante der Sacköffnung 15 zu liegen kommt. Damit wird sichergestellt, daß der Bereich des Abdichtkragens 16 zwischen der Sacköffnung 15 und der Aufsetzlinie 54 beim Befüllen von Füllgut freigehalten wird, d.h. insbesondere staubfrei gehalten wird.

In Förderrichtung anschließend an die Füllstation 51 ist eine erste Verschließstation 71 gezeigt, die Führungsleisten 72, 72' und Paare von Transportbändern 73, 73' in gleicher Konfiguration wie die Füllstation 51 aufweist. An den Transportbändern 73 sind auch hier obere Transportbänder 73o, teilweise zusammenwirkend mit unteren Transportbändern 73u gezeigt. Auf der Sacköffnung liegt ein Abdeckblatt 19 auf, an dem ein Versiegelungsrand 20 gekennzeichnet ist, der im wesentlichen den zuvor von Staub freigehaltenen Bereich zwischen der Abdichtkante an der Sacköffnung und Aufsetzkante 54 umfaßt. Im Anschluß an die erste Verschließstation 71 kann eine zweite Verschließstation folgen, wobei zwischen den Verschließstationen Umlenkschuhe vorgesehen sein können, die die Verschlußlappen in die in Figur 1a) gezeigte Position überführen und ggf. nach einem entsprechenden Beleimen sogar aufeinanderklappen können.

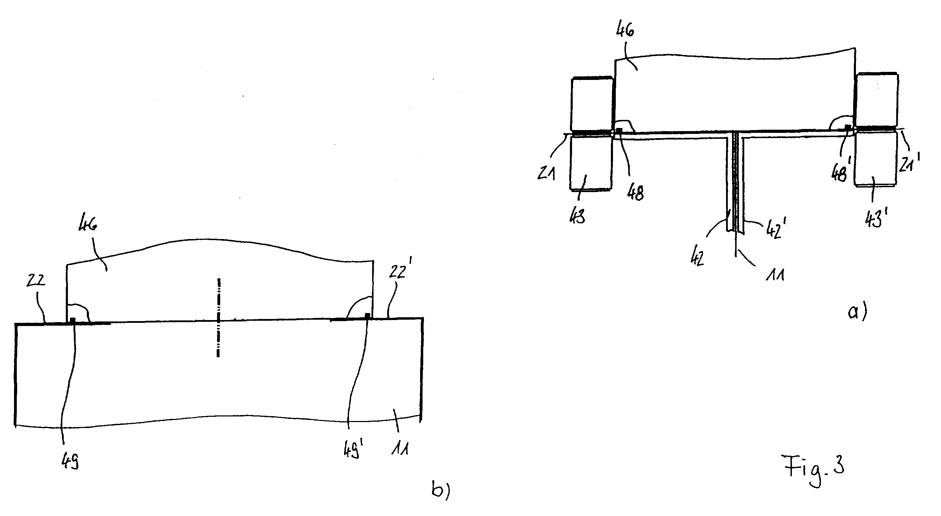

In Figur 3a) ist ein Querschnitt durch die Prüfstation bei noch flach zusammengedrücktem Sack gezeigt, wie er beim Prüfen vorliegt. Als bereits vorher angesprochene Einzelheiten der Prüfstation sind die Paare von Abstützwinkeln 42, 42' und die Paare von Transportbändern 43o, 43u, 43'o, 43'u erkennbar. Die Abstütz-winkel unterstützen mit ihren oberen Schenkeln die inneren Teile der ersten Verschlußlappen und die Streifen 13 des Sackkorpus. Die vertikalen Schenkel der Abstützwinkel halten den Sackkorpus dicht zusammen. Vom Druckstutzen 46 sind längs der Aufsetz- und Abdichtlinie verlaufende erste längsverlaufende Dichtungen 48 erkennbar, die somit etwa mittig auf den Verschlußlappen 21, 21' aufliegen, die sich noch bis zwischen die Transportbänder fortsetzen.

In Figur 3b) ist ein Längsschnitt durch einen Sack in der Prüfstation gezeigt, wobei die nach innen weisenden zweiten Verschlußlappen 22, 22' geschnitten sind. Am Druckstutzen 46 sind Querdichtungen 49, 49' erkennbar, die unmittelbar innerhalb der Aufsetz- und Abdichtkante des Druckstutzens verlaufen.

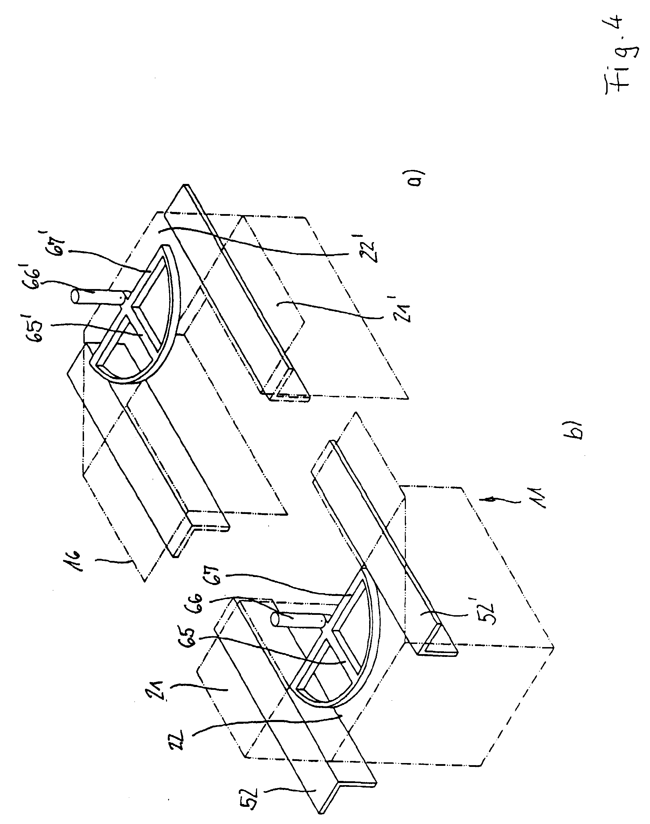

In Figur 4 sind die zu einem Füllstutzen 61 gehörigen beiden Abstützelemente 65, 65' mit den jeweils zugehörigen Hub- und Drehzapfen 66, 66' in bezüglich der Sacköffnung 15 eines in der Station befindlichen gebrochen dargestellten Sackes in unterschiedlichen Positionen gezeigt. In Figur 4a) befindet sich das halbscheibenförmige durchbrochene Abstützelement 65 oberhalb des Abdichtkragens 16 und oberhalb der Sacköffnung 15. In Figur 4b ist das Abstützelement 65 so abgesenkt, daß das halbscheibenförmige durchbrochene Abstützelement 65 tiefer als die Ebene des Abdichtkragens 8 liegt, d.h. mit seiner Oberseite in der durch die Führungsprofile 52, 52' aufgespannten Ebene. Durch Drehung uni 180° nach dem Absenken ist das Abstützelement 65 unter einen der zweiten Verschlußlappen 22 verbracht worden. Auch wenn der Sack hier in der bereits vollkommen geöffneten Position gezeigt ist, die er nach dem Befüllen einnimmt, ist das Einbringen der Abstützelemente durch Absenken und Drehen uni 180° bereits in der z.B. in Figur 2a) dargestellten Konfiguration des Sackes erfolgt, in der der Sack in die Befüllstation 51 überführt wird. Die Streiten 13, 13' werden hierbei nur geringfügig nach unten gedrückt ohne daß die Gestalt des Sackes im übrigen wesentlich geändert wird. Auf den Quersteg 67 in der in Figur 3b) dargestellten Position legt sich eine Dichtkante von oben auf den dazwischen liegenden zweiten Verschlußlappen 22 auf. Die halbscheibenförmige Ausführung erlaubt ein Hineindrehen aus der Position nach Figur 3a) in die Abstützposition nach Figur 3b). Bei entsprechender schautelförmiger Ausführung ist jedoch auch ein Absenken und Horizontalverschieben eines Abstützelements möglich.

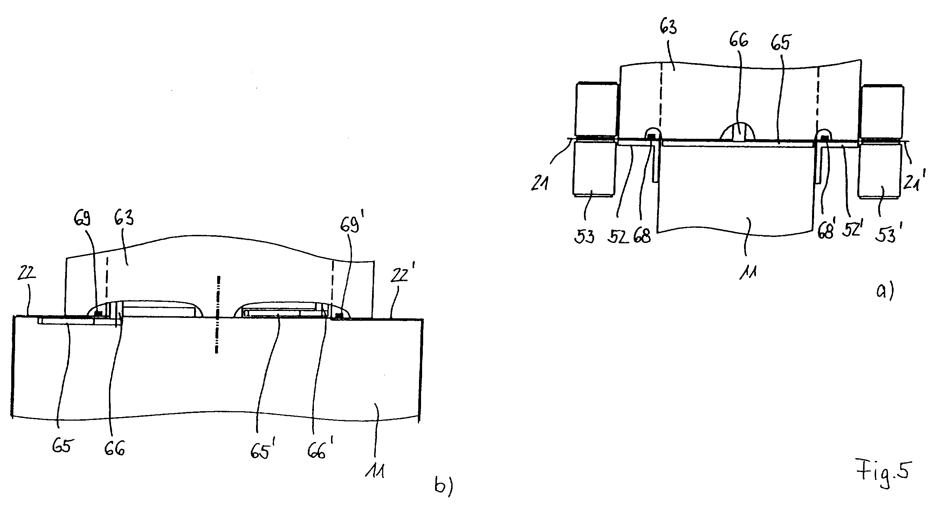

In Figur 5a) ist ein Querschnitt durch die Befüllstation bei bereist vollständig aufgespreiztem Sack 11 gezeigt, wie er beim Befüllen ensteht. Als bereits vorher angesprochene Einzelheiten der Befüllstation sind die Paare von Führungsprofilen 52, 52' und die Paare von Transportbändern 53o, 53u, 53'o, 53'u erkennbar. Die Führungsprofile 52 unterstützen mit ihrem oberen Schenkel die inneren Teile der ersten Verschlußlappen 21, 21'. Die Transportbänder 53 pressen und halten die äußeren Bereiche der ersten Verschlußlappen 21, 21'. Vom Füllstutzen 61 ist das im wesentlichen parallelwandige Mundstück 63 mit seinen Aufsetzrand 64 erkennbar. In ausgeschnittenen Bereichen sind unmittelbar neben der Kante der Sacköffnung 15 liegende Längsdichtungen 68 gezeigt, die sich auf die von den Führungsprofilen 52 unterstützten Bereiche der Verschlußlappen 21, 21' auflegen. Die außerhalb dieser Begrenzung liegenden Teile der ersten Verschlußlappen sind somit beim Befüllen gegen die Beaufschlagung mit Füllgut abgedichtet. Das Mundstück 63 ist wie dargestellt doppelwandig, so daß der freie Innenquerschnitt des Mundstückes 63 dem Sacköffnungsquerschnitt entspricht. Es ist weiterhin das Abstützelement 65 mit dem Zapfen 66 in der aus Figur 4b) bekannten, unter den zweiten Verschlußlappen abgesenkten Position gezeigt, wobei die Oberfläche in einer Ebene mit der Oberfläche der Führungsprofile 52 liegt.

In Figur 5b) ist ein Längsschnitt durch einen Sack in der Befüllposition gezeigt, wobei das doppelwandige Mundstück 63 sowie der Sack 11 mit den nach innen weisenden zweiten Verschlußlappen 22, 22' erkennbar ist. Am doppelwandigen Mundstück 63 sind Querdichtungen 69, 69' erkennbar, die unmittelbar außerhalb und im wesentlichen parallel zur Kante der Sacköffnung 15 verlaufen. In der linken Bildhälfte ist das Abstützelement 65 in der aus Figur 4b) bekannten und beschriebenen Position gezeigt, in der es den Verschlußlappen 22 von unten gegen das oben angedrückte Mundstück 63 abstützt. In der rechten Bildhälfte ist das Abstützelement 65' in der aus Figur 4a) bekannten Position gezeigt, in der es durch Drehen um 180° und Anheben des Zapfens 66 aus dem Sackbereich herausgeführt ist. Bei geringfügigen Abheben des Mundstückes 63 kann der Sack weitertransportiert werden. Der außerhalb der Dichtungen 69, 69' liegende Bereich der Verschlußlappen 22 wird wiederum vom Füllgut freigehalten, d.h. insbesondere staubfrei. Die Querdichtungen 69 schließen so an die Längsdichtung 68 an, so daß eine umlaufende Abdichtlinie entsteht.

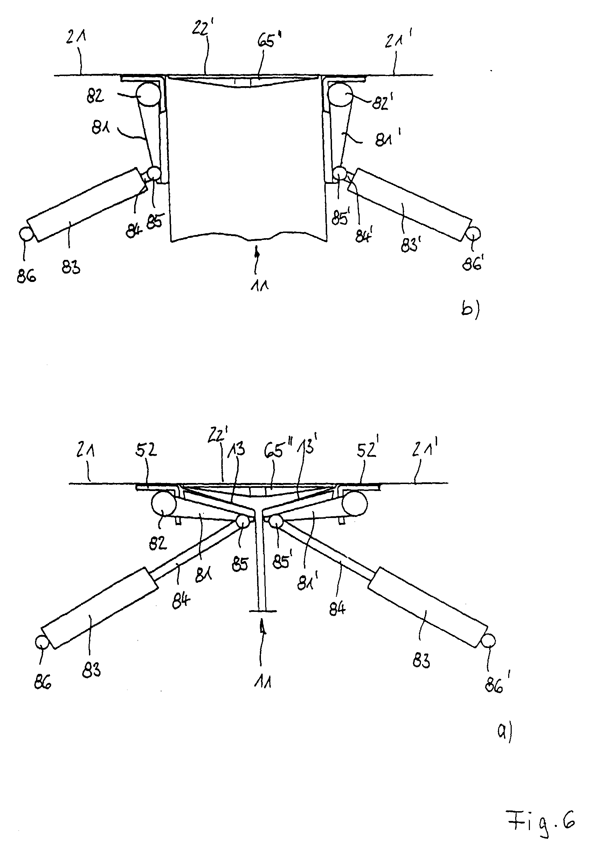

In Figur 6 sind weitere Einzelheiten aus dem Bereich einer Befüllstation 51 gezeigt, wobei zur Orientierung nur die Führungsprofile 52, 52', nicht jedoch der seitlich außerhalb derselben liegenden Transportbänderpaare gezeigt werden. In Figur 6a) ist ein Sack in einer Konfiguration gezeigt, wie er in die Befüllstation eingeführt wird, d.h. insbesondere mit aneinanderliegenden Sackwänden 1, 1', so daß der Korpus flach zusammengedrückt ist. Die ersten Verschlußlappen 21, 21' werden von unten durch die Führungsprofile 52, 52' abgestützt. Die darüber hinausstehenden Bereiche der Verschlußlappen 21, 21' werden von den hier nicht gezeigten Transportbändern festgehalten. Unter den erkennbaren zweiten Verschlußlappen 22 ist ein Abstützelement 65'' gezeigt, dessen Unterseite vorzugsweise leicht stumpfkegelig ist. Die Streifen 13, 13' des Sackkorpus, die im wesentlichen noch in der Ebene des Abdichtkragens lagen, sind hierdurch leicht eingedrückt, wobei sie von unten durch paarweise angeordnete Prallplatten 81 unterstützt werden. Die Prallplatten 81, 81' sind drehbar gelagert um Zapfen 82, 82' mit horizontaler, in Richtung der Führungsprofile 51 laufender Drehachsen. Die Bewegung der Prallplatten wird durch Dämpfer 83, 83' gedämpft, die mit ihrer Kolbenstange 84, 84' über Drehzapfen 85, 85' an den freien Enden der Prallplatten angreifen und die selber in Drehzapfen 86, 86' schwenkbar gelagert sind. Wird der in Figur 5a) gezeigten Position die gesamte Füllmenge im Fülltrichter freigegeben und fällt auf die Wandungsteile 13, 13', so kann durch die gezeigte Abstützung durch die Prallplatten kein Zerreissen oder Zerstören zustandekommen, da der Impuls der Füllmenge zunächst von den gedämpft nachgebenden Prallplatten 81, 81' aufgefangen wird, so daß das Füllgut den Sack nur gesteuert zunehmend von oben nach unten aufspreizen kann bis die in Figur 5b gezeigte Stellung eingenommen ist. Hierbei sind die Prallplatten senkrecht und liegen parallel zu den ersten Sackwänden 1, 1'. Der gefüllte Sack kann aus dieser Position weiterbefördert werden in eine Verschließstation. Ein weiterer noch flachgedrückter Sack kann nachgeführt werden. Danach sind die Prallplatten mittels der Dämpfelemente 83 wieder in die Ausgangslage zu bringen, ebenso wie die zuvor zurückgezogenen Abstützelemente 65 wieder in die Sacköffnung einzuführen und unter die zweiten Verschlußlappen zu bringen sind.

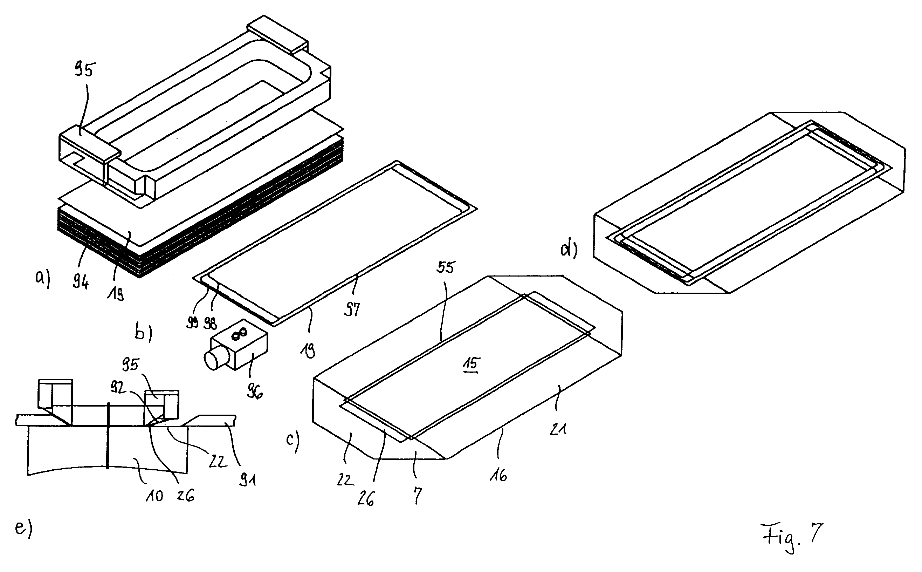

In Figur 7 ist in a) ein Blattstapel 94 von Abdeckblättern gezeigt, von dem ein erstes Abdeckblatt 19 abgehoben angedeutet ist. Oberhalb des Blattstapels 94 ist ein Aufnahmerahmen 95 gezeigt, der ein Abdeckblatt abheben und in eine Position querverschieben kann, in der das Abdeckblatt mit einem Kleberauftrag versehen wird.

In b) ist eine Station mit einer Doppeldüse 96 und mit einem einzelnen auf der Unterseite mit Kleber versehenen Abdeckblatt gezeigt. Der Aufnahmerahmen 95 kann das Abdeckblatt 19 in der hier gezeigten Position halten. Die Doppeldüse 96 kann bei zu sich selber parallel gehaltener Längsachse in einem Rechteck entlang der Kanten des Abdeckblattes geführt werden, hierbei entstehen erste Kleberraupen 97 längs der Längskanten und doppelliegende Kleberraupen 98, 99 längs der Querkanten.

In c) ist ein Abdichtkragen 16 mit ersten Verschlußlappen 21 und zweiten Verschlußlappen 22 gezeigt, die jeweils an den Ecken doppeltliegende Verschlußecken 7 miteinander bilden. Der Abdichtkragen 16 umschließt die Sacköffnung 15 des gefüllten Sackes. Mit geringem Abstand zur Kante der Sacköffnung 15 ist die Abdichtlinie 55 eingezeichnet, außerhalb derer der Abdichtkragen beim Befüllen des Sackes staubfrei gehalten ist. Bereits bei der Sackherstellung sind am Zuschnitt doppelt gefaltete Verschlußleisten 26 auf die zweiten Verschlußlappen 22 aufgesetzt, deren Knickkante innen entlang der Sacköffnung 15 verläuft und die sich nach außen V-förmig öffnen. Ein unterer Streifen dieser Verschlußleisten 26 ist mit den jeweiligen zweiten Verschlußlappen 22 verklebt oder verschweißt, ein oberer Streifen ist an der Knickkante angelegt und gegenüber dem unteren Streifen aufklappbar. Es ist erkennbar, daß der wesentliche Bereich dieser Verschlußleisten 26 außerhalb der Abdichtlinie 55 liegt und damit beim Befüllen des Sackes staubfrei gehalten wird.

In d) ist erkennbar, wie das Abdeckblatt 19 auf die Sacköffnung 15 gelegt ist. Die ersten Kleberraupen 97 sind im wesentlichen mit den ersten Verschlußlappen 21 verbunden. Die zweiten Kleberraupen 98 sind mit den oberen Streifen der Verschlußleisten 26 verklebt. Die zweiten Kleberraupen 99 sind außerhalb der Verschlußleisten 26 unmittelbar mit den zweiten Verschlußlappen 22 verbunden.

In e) ist ein Vertikalschnitt durch einen Sack gezeigt, bei dem der Schnitt in Längsrichtung der Sacköffnung gelegt ist und die zweiten Verschlußlappen 22 nach innen auf den Sackkorpus 10 umgeschlagen sind. In Nähe der Sacköffnung sind die doppeltliegenden Verschlußleisten 26 angedeutet. Erste Keilwerkzeuge 91 können unter die aufgeklappten oberen Streifen der Verschlußleisten 26 einfahren, wie in der linken Darstellung gezeigt, obere Keilwerkzeuge 92, die insbesondere unten am Aufnahmerahmen 95 ausgebildet sind, können das aufgelegte Abdeckblatt 19 zum Verkleben der ersten Kleberraupe 98 dagegendrücken. Zum Andrücken der zweiten Kleberraupe 99 an die zweiten Verschlußlappen 22 ist das erste Keilwerkzeug 91 zurückzuziehen.

Abwandlungen des hiermit beschriebenen sind für den Fachmann möglich, ohne daß der Gegenstand der Erfindung verlassen wird.

### Bezugszeichenliste

- 1: erste Sackwandung
- 2: zweite Sackwandung
- 7: Verschlußzwickel
- 8: Sackverschluß
- 9: Sackboden
- 10: Sackkorpus
- 11: Sack (fertig)
- 12: Öffnung (schlitzförmig)
- 13: Streifen
- 14: Endzwickel
- 15: Sacköffnung (rechtwinklig)
- 16: Abdichtkragen
- 17: Abdichtlinie
- 18: Anschlußkante
- 19: Abdeckblatt
- 20: Kleberrand
- 21: erster Verschlußlappen
- 22: zweiter Verschlußlappen
- 23: Innenbereich
- 24: Außenbereich
- 25: Knickkante
- 26: Verschlußleiste
- 31: Einführstation
- 32: Führungsprofil
- 33: Transportbänder
- 34: Übergangsabschnitt
- 41: Prüfstation
- 42: Abstützprofil
- 43: Transportbänder
- 44: Abwurfrolle
- 45: Aufsetz- und Abdichtlinie
- 46: Druckstutzen
- 47: Druckluftzuführung
- 48: Längsdichtung
- 49: Querdichtung
- 51: Füllstation
- 52: Führungsprofil
- 53: Transportbänder
- 54: Aufsetzlinie
- 55: Abdichtlinie
- 61: Füllstutzen
- 62: Aufgabetrichter
- 63: Mundstück
- 64: Aufsetzrand
- 65: Abstützelement
- 66: Zapfen
- 67: Quersteg
- 68: Längsdichtung
- 69: Querdichtung
- 71: Verschließstation
- 72: Führungungsprofil
- 73: Transportbänder
- 81: Prallplatte
- 82: Drehzapfen
- 83: Dämpfer
- 84: Kolbenstange
- 85: Drehzapfen
- 86: Drehzapfen
- 91: Keilwerkzeug
- 92: Keilwerkzeug
- 93: -
- 94: Blattstapel
- 95: Aufnahmerahmen
- 96: Doppeldüse
- 97: Kleberraupe
- 98: Kleberraupe
- 99: Kleberraupe

## Patentansprüche

1. Verfahren zum Transportieren, Prüfen, Befüllen und Verschließen eines Sackes (11), welcher
- einen zu einem rechteckigen Querschnitt aufspreizbaren Sackkorpus (10) aus zwei breiteren ersten und zwei schmaleren zweiten Sackwandungen (1, 2),
- einen den Sackkorpus (10) unten verschließenden Sackboden (9),
- eine den Sackkorpus (10) oben begrenzende Sacköffnung (15) und
- einen geöffneten Sackverschluß (8)
umfaßt, wobei der Sackverschluß seinerseits
- erste Verschlußlappen (21), die jeweils an den ersten Sackwendungen anschließen und rechtwinklig zu den ersten Sackwandungen (1) horizontal von der Sacköffnung (15) nach außen wegstehen,
- zweite Verschlußlappen (22), die jeweils an den zweiten Sackwandungen (2) anschließen und die - insbesondere nach innen auf die Sacköffnung umgeschlagen - horizontal liegen,
umfaßt
so daß die ersten Verschlußlappen (21) und die zweiten Verschlußlappen (22) einen in einer horizontalen Ebene liegenden rahmenförmigen Abdichtkragen (16) bilden,
bei dem während des Transportierens, Prüfens, Befüllens und Verschließens die Außenbereiche (23) der ersten Verschlußlappen (21) von antreibbaren Fördermitteln (33, 43, 53) gehalten werden.

2. Verfahren nach Anspruch 1,
dadurch gekennzeichnet,
daß zu Beginn des Transportierens (am Anfang des Transportweges) am Sack (11) obenliegende Streifen (13) der ersten Sackwandungen (1) in die horizontale Ebene der ersten Verschlußlappen (21) einbezogen sind und bei flachgedrücktem verkürzten Sackkorpus eine schlitzförmige Öffnung (12) bilden.

3. Verfahren nach Anspruch 2,
dadurch gekennzeichnet,
daß die obenliegenden Streifen (13) der ersten Sackwandungen (1) und die Innenbereiche (24) der ersten Verschlußlappen (21) zu Beginn des Transportierens (am Anfang des Transportweges) unmittelbar an den ersten Sackwandungen (1) von stationären Führungsleisten (32) von unten unterstützt werden.

4. Verfahren nach Anspruch 3,
dadurch gekennzeichnet,
daß ein Sack (11) mit flachgedrücktem Sackkorpus (10) zwischen senkrechte parallele Abstützplatten (42) - insbesondere in Form von Gitterrosten - eingeführt wird.

5. Verfahren nach Anspruch 4,
dadurch gekennzeichnet,
daß bei seitlich zwischen den Abstützplatten (42) abgestützten ersten Sackwandungen (1) zur Prüfung der Dichtig keit eines Sackes (11) Druckluft über die Sacköffnung (15) aufgegeben wird.

6. Verfahren nach Anspruch 5,
dadurch gekennzeichnet,
daß bei negativer Prüfung der Dichtigkeit eines Sackes (11) die Abstützplatten (42) und Fördermittel (43) so voneinander entfernt werden, daß der Sack (11) abgeworfen wird.

7. Verfahren nach einem der Ansprüche 1 bis 5,
dadurch gekennzeichnet,
daß zum Befüllen eines Sackes (11) ein Füllstutzen (61) umlaufend abdichtend von oben auf die Fläche des Abdichtkragens (16) aufgesetzt wird, wobei die ersten Verschlußlappen (21) und die zweiten Verschlußlappen (22) von unten unterstützt werden.

8. Verfahren nach Anspruch 7,
dadurch gekennzeichnet,
daß beim Befüllen eines Sackes (11) die ersten Verschlußlappen (21) von Führungsleisten (52) unterstützt werden.

9. Verfahren nach Anspruch 7,
dadurch gekennzeichnet,
daß beim Befüllen eines Sackes (11) die zweiten Verschlußlappen durch zwischen die zweiten Verschlußlappen (22) und die obenliegenden Streifen (13) eingeführte Abstützelemente (65) von unten unterstützt werden.

10. Verfahren nach einem der Ansprüche 7 bis 9,
dadurch gekennzeichnet,
daß das Befühlen eines Sackes (11) bei noch schlitzförmiger Öffnung (12) des im wesentlichen flachgedrücktem Sackkorpus (10) einsetzt und die in die Ebene des Abdichtkragens (16) einbezogenen obenliegenden Streifen (13) der ersten Sackwandungen (1) dabei nachgebend von unten unterstützt werden.

11. Verfahren nach einem der Ansprüche 7 bis 10,
dadurch gekennzeichnet,
daß beim Befüllen eines Sackes dieser ausschließlich an den Außenstreifen (23) der ersten Verschlußlappen (21) eingeklemmt gehalten wird und der Sackkorpus (10) während des Befüllens unterstützungsfrei hängt.

12. Verfahren nach einem der Ansprüche 7 bis 11,
dadurch gekennzeichnet,
daß Verschlußleisten (6) an den zweiten Verschlußlappen (22) von der Sacköffnung (15) nach außen umgefaltet werden, bevor der Fühlstutzen (61) auf den Abdichtkragen (16) aufgesetzt wird.

13. Verfahren nach einem der vorhergehenden Ansprüche,
dadurch gekennzeichnet,
daß zum Verschließen eines Sackes ein Abdeckblatt (19) auf den Abdichtkragen (16) aufgelegt wird und mit diesem in einem außerhalb der vom Füllstutzen (61) abgedichteten Fläche liegenden Bereich verschweißt oder verklebt wird.

14. Verfahren nach Anspruch 13,
dadurch gekennzeichnet,
daß nach dem Aufbringen des Abdeckblattes (19) auf den Abdichtkragen (16) die ersten Verschlußlappen (21) nach innen geschlagen und miteinander verschweißt, verklebt oder vernäht werden.

15. Vorrichtung zum Transportieren, Prüfen, Befüllen und Verschließen eines Sackes (11), welcher
- einen zu einem rechteckigen Querschnitt aufspreizbaren Sackkorpus (10) aus zwei breiteren ersten und zwei schmaleren zweiten Sackwandungen (1, 2),
- einen den Sackkorpus (10) unten verschließenden Sackboden (9),
- eine den Sackkorpus (10) oben begrenzende Sacköffnung (15) und
- einen geöffneten Sackverschluß (8)
umfaßt, wobei der Sackverschluß seinerseits
- erste Verschlußlappen (21), die rechtwinklig zu den ersten Sackwandungen (1) horizontal von der Sacköffnung (15) nach außen wegstehen,
- zweite Verschlußlappen (22), die jeweils an den zweiten Sackwandungen (2) anschließen und die - insbesondere nach innen auf die Sacköffnung umgeschlagen - horizontal liegen,
umfaßt
so daß die ersten Verschlußlappen (21) und die zweiten Verschlußlappen (22) einen in einer horizontalen Ebene liegenden rahmenförmigen Abdichtkragen (16) bilden,
wobei die Vorrichtung stationär angeordnete antreibbare Fördermittel in Form von parallel zueinander verlaufenden Anordnungen mit Paaren von jeweils oberen und unteren Transportbändern (33, 43, 53) oder Transportrollen hat, zwischen denen Außenbereiche (23) der ersten Verschlußlappen (21) von oben und unten gehalten werden.

16. Vorrichtung nach Anspruch 15,
gekennzeichnet durch eine Einführstation (31) mit dicht an den Sackwandungen (1, 2) anliegenden Führungsleisten (32), die die Verschlußlappen (21) eines durchlaufenden Sackes unterstützen.

17. Vorrichtung nach einem der Ansprüche 15 oder 16,
gekennzeichnet durch eine Prüfstation (41) mit parallelen, den im wesentlichen flachgedrückten Sackkorpus (10) eines eingeführten Sackes (11) abstützende Abstützplatten (42), insbesondere in Form von Gitterrosten, sowie eine Druckluftprüfplatte, die mit umlaufenden Abdichtmitteln versehen ist, die auf die Fläche des Abdichtkragens (16) eines eingeführten Sackes (11) aufsetzbar sind.

18. Vorrichtung nach einem der Ansprüche 15 bis 17,
gekennzeichnet durch eine Befühlstation (51) mit einem vertikal beweglichen Füllstutzen (61), der mit umlaufenden Abdichtmitteln (68, 69) versehen ist, die auf die Fläche des Abdichtkragens (16) eines eingeführten Sackes (11) aufsetzbar sind.

19. Vorrichtung nach Anspruch 18,
gekennzeichnet durch Abstützelemente, die die ersten Verschlußlappen (21) und die zweiten Verschlußlappen (22) eines eingeführten Sackes unterhalb der Abdichtmittel (68, 69) des Füllstutzens (61) abstützen.

20. Vorrichtung nach Anspruch 18,
gekennzeichnet durch parallele Führungsleisten (52), die innerhalb der Fördermittel (53) liegen, um die ersten Verschlußlappen (21) zu unterstützen.

21. Vorrichtung nach Anspruch 19 und 20,
gekennzeichnet durch innerhalb des Füllstutzens (61) angeordnete höhenverstellbare drehbare, schwenkbare oder querverschiebbare Abstützplatten (65), die von oberhalb der Sacköffnung (15) eines eingeführten Sackes (11) bis unter die Ebene des Abdichtkragens (16) eingeführt und zur Abstützung der zweiten Verschlußlappen (22) unter diese eingedreht, geschwenkt oder verschoben werden können.

22. Vorrichtung nach einem der Ansprüche 15 bis 21,
gekennzeichnet durch ein Paar von Prallklappen (81), die um parallele in Richtung der zweiten Verschlußlappen (22) verlaufende Scharniere (82) aus einer nach unten innen gepfeilten etwa horizontalen Lage gedämpft nachgiebig nach unten schwenkbar sind und in ihrer etwa horizontalen Lage die in die Ebene des Abdichtkragens (16) einbezogenen Streifen (13) der ersten Wandungen (1) von unten unterstützen und in ihrer nach unten geschwenkten Lage den vollen Sackquerschnitt freigeben.

23. Vorrichtung nach einem der Ansprüche 15 bis 22,
gekennzeichnet durch eine erste Verschließstation (71) mit Beleimungsmitteln zum Beleimen eines vereinzelten Abdeckblattes (19) und mit Ablegemitteln zum Ablegen eines Abdeckblattes (19) auf den Abdichtkragen (16) eines in der Verschließstation befindlichen Sackes (11).

24. Vorrichtung nach Anspruch 23,
gekennzeichnet durch eine erste Verschließstation mit zumindest einer Andrückrolle, die oberhalb des Abdichtkragens (16) liegt und mit Gegendruckrollen, die unter dem Abdichtkragen unterhalb der zumindest einen Andrückrolle liegen, und die gemeinsam die ersten Verschlußlappen (21) und ein Abdeckblatt (19) gegeneinander abrollend zusammendrücken.

25. Vorrichtung nach einem der Ansprüche 23 oder 24,
gekennzeichnet durch eine erste Verschließstation mit Abstützkeilen (91), die unter nach außen umgeknickte Verschlußleisten (26) insbesondere der zweiten Verschlußlappen (22) einschiebbar sind und durch Andrückkeile (92), die ergänzend an die Abstützkeile (91) angepaßt sind und - um ein Abdeckblatt (19) auf die nach außen umgeknickten Verschlußleisten (26) zudrücken - auf die Endkanten des Abdeckblattes (19) absenkbar sind.

26. Vorrichtung nach einem der Ansprüche 15 bis 25,
gekennzeichnet durch eine zweite Verschließstation, in der die Verschlußlappen (21, 22) aus der Ebene des Abdichtkragens (16) aufgebogen und miteinander verklebt, verschweißt oder vernäht werden.

27. Sack für die Befüllung mit einem Schüttgut mit
einem zu einem rechteckigen Querschnitt aufspreizbaren Sackkorpus (10) aus zwei breiteren ersten und zwei schmaleren zweiten Sackwandungen (1 bzw. 2), einem den Sackkorpus (10) unten verschließenden Sackboden (9) und
einer den Sackkorpus (10) oben begrenzenden Sacköffnung (15),
gekennzeichnet durch erste Verschlußlappen (21,21'), die an die ersten Sackwandungen (1) anschließend von der Sacköffnung (15) nach außen abstehen, und zweite Verschlußlappen (22,22'), die jeweils an den zweiten Sackwandungen (2) anschließen und nach innen auf die Sacköffnung umgeschlagen sind, so daß die ersten und die zweiten Verschlußlappen (21,21'; 22,22') einen rahmenförmigen Dichtkragen (16) bilden.
